# EUROPEAN PATENT APPLICATION

(11) **EP 2 991 020 A1**
(43) Date of publication of application: **02.03.2016**
(21) Application number: 15162827.8
(22) Date of filing: 08.04.2015
(51) Int. Cl.: G06Q 30/02, G06Q 50/00

(54) **UPDATING PROMOTIONS PROVIDED TO SOCIAL MEDIA GROUPS**

(30) Priority: 28.08.2014 US 201414471441
(71) Applicant: Accenture Global Services Limited, Dublin 4 (IE)
(72) Inventor: Kumar Goel, Puneet, 560066 Bangalore, Karnataka (IN)
(74) Representative: Müller-Boré & Partner Patentanwälte PartG mbB

(57) **Abstract**

A device is configured to select a social media group to target with a promotion for an item. The device may generate the promotion. The promotion may indicate an offer for the item and indicate that the offer will change after a particular period of time. The device may provide the promotion to the social media group via a social media website. The device may determine an updated offer for the promotion based on at least one of a quantity of items sold during the particular period of time or a review of the item posted on the social media website by a member of the social media group. The device may update the promotion provided to the social media group, via the social media website, to indicate the updated offer after the particular period of time expires.

## Description

### BACKGROUND

Digital marketing may be used to make potential customers aware of a product. For example, a marketer may post an advertisement for a product on platforms such as websites, e-mails, applications, and/or social media networks.

### SUMMARY

In some possible implementations, a device may select a social media group to target with a promotion for an item. The device may generate the promotion. The promotion may indicate an offer for the item and indicate that the offer will change after a particular period of time. The device may provide the promotion to the social media group via a social media website. The device may determine an updated offer for the promotion based on at least one of a quantity of items sold during the particular period of time or a review of the item posted on the social media website by a member of the social media group. The device may update the promotion provided to the social media group, via the social media website, to indicate the updated offer after the particular period of time expires.

In some implementations, a computer-readable medium may store instructions that, when executed by one or more processors of a device, cause the one or more processors to select a social media group to target with a promotion for an item. The instructions may cause the processor to generate the promotion. The promotion may indicate an offer for the item and indicate that the offer is valid for a particular period of time. The instructions may cause the processor to post the promotion on a webpage for the social media group via a social media website. The instructions may cause the processor to determine an updated offer for the promotion based on a review posted on the social media website by a member of the social media group. The instructions may cause the processor to update the promotion posted to the webpage for the social media group to indicate the updated offer after the particular period of time expires.

In some implementations, a method may include selecting, by a device, a social media group to target with a promotion for an item. The method may include generating, by the device, the promotion. The promotion may indicate an offer for the item and indicate that the offer will change after a particular period of time. The method may include providing, by the device, the promotion to the social media group via a social media website. The method may include determining, by the device, an updated offer for the promotion based on at least one of a quantity of items sold via the promotion during the particular period of time or a review of the item posted on the social media website by a member of the social media group. The method may include updating, by the device, the promotion provided to the social media group to indicate the updated offer after the particular period of time expires.

### BRIEF DESCRIPTION OF THE DRAWINGS

Fig. 1 is a diagram of an overview of an example implementation described herein;
Fig. 2 is a diagram of an example environment in which systems and/or methods, described herein, may be implemented;
Fig. 3 is a diagram of example components of one or more devices of Fig. 2;
Fig. 4 is a flow chart of an example process for providing a promotion to a social media group; and
Figs. 5A-5C are diagrams of an example implementation relating to the example process shown in Fig. 4.

### DETAILED DESCRIPTION

The following detailed description of example implementations refers to the accompanying drawings. The same reference numbers in different drawings may identify the same or similar elements.

Getting potential customers to purchase a product, especially a new product, may be difficult because there is little to no awareness of the product. Moreover, creating awareness of the product may be difficult. Creating awareness for a new product may require an extensive advertising campaign because there may be no word of mouth publicity about a new product yet. Accordingly, to create awareness of the product, a first set of buyers may be targeted via marketing that will start word of mouth publicity. The first set of buyers may be a specifically targeted group that the product is geared toward, such as a social media group.

Even if potential customers are aware of the product, it still may be difficult to actually get the potential customers to purchase the product because the awareness may come from untrusted sources. For example, potential customers may not trust advertisements from marketers or a review written by someone a potential customer does not know. On the other hand, a potential customer may be more likely to purchase a product if the potential customer heard about the product from a trusted source, such as a social media contact. For example, a potential customer may be more influenced by word of mouth publicity or a review from a social media contact than from someone the potential customer does not know. Accordingly, a more effective awareness of the product may be created by people spreading awareness of the product to social media contacts.

Implementations described herein may create awareness of a product by providing promotions to targeted social media groups on social media websites. Moreover, implementations described herein may use gamification to keep members of the social media groups interested in the product and/or the promotion by continuously updating an offer in the promotion. Furthermore, implementations described herein may encourage members of the social media group to post reviews of the product on the social media website so that contacts of the members may become aware of the product.

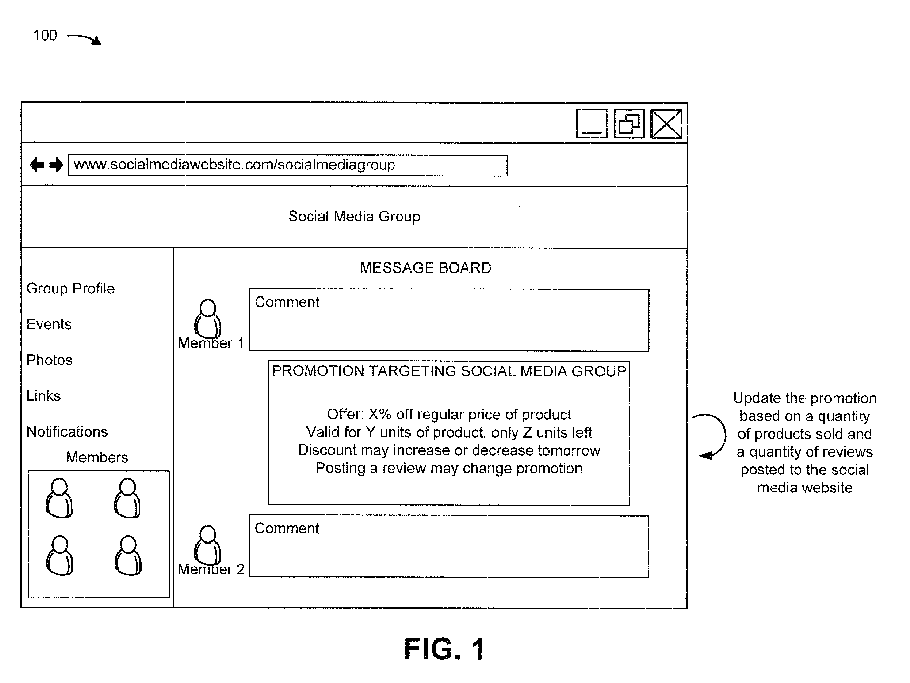

Fig. 1 is a diagram of an overview of an example implementation 100 described herein. In Fig. 1, assume a distributer of a product requests that a marketing server market a product. The marketing server may select a social media group on a social media website to target based on the product and a description of the social media group. For example, the social media group may have members that are of a particular demographic to which to market the product.

The marketing server may create a promotion to provide to the social media group. The marketing server may provide the promotion to the social media website to be posted on a webpage for the social media group. For example, the promotion may be provided as an advertisement and/or as a post on a message board for the social media group.

As shown in Fig. 1, the promotion may include an offer (e.g., a price for the product, a discount, a coupon, etc.) to entice a member of the social media group to purchase the product.

In some implementations, there may be a limited number of products that may be sold via the promotion. Accordingly, the promotion may include availability information that indicates a number of units of the product that may be sold via the promotion and/or that are still available to be sold via the promotion. Moreover, the promotion may indicate that the offer included in the promotion may change after a particular amount of time. Including this information may keep members of the social media group engaged with the promotion over a period of time, and thus increase awareness of the product among potential first buyers. For example, a member of the social media group may use the availability information to determine if the member should purchase the product now before supplies run out, or continue to monitor the promotion for a better offer that may come in the future.

Additionally, or alternatively, the promotion may indicate that if a member of the social media group posts a review of the product to the social media website, then the number of units of product available via the promotion may increase and/or that the offer may improve resulting in a lower price of the product for other members of the social media group. In other words, the promotion may encourage members of the social media group to post reviews of the product on the social media website to increase word of mouth publicity among potential customers that trust the reviewer's opinion.

The marketing server may track how many units of the product are sold via the promotion and how many reviews of the product are posted by members of the social media group. The marketing server may update the offer and the availability information included in the promotion based on the number of units of product sold and/or the number of reviews posted.

In this way, the marketing server may create awareness for a product among potential customers and increase word of mouth publicity for the product.

While this description will focus on promotions for products, implementations described herein are not are not limited to products. In some implementations, promotions for other items, such as a service, may be provided to members of a social media group.

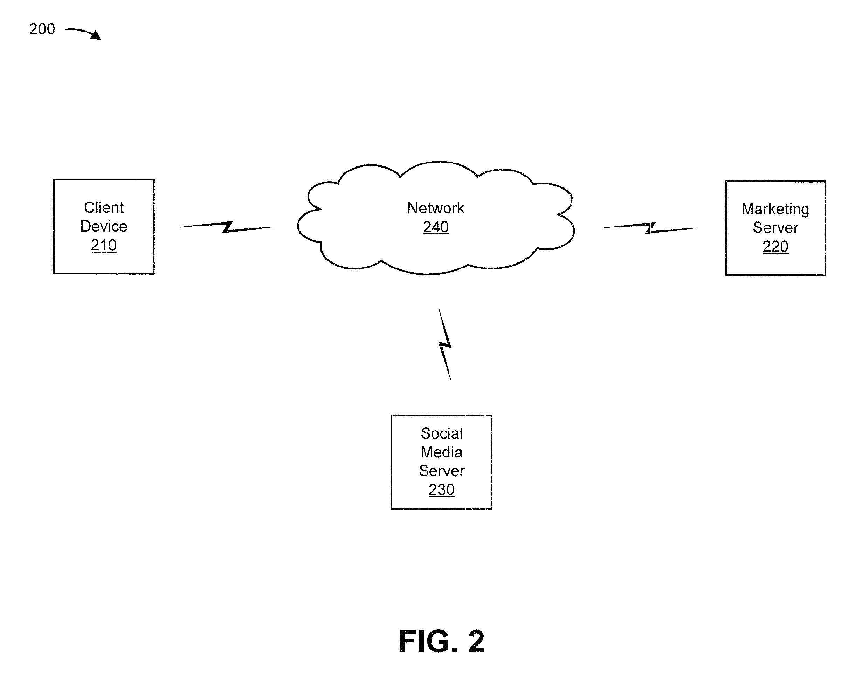

Fig. 2 is a diagram of an example environment 200 in which systems and/or methods, described herein, may be implemented. As shown in Fig. 2, environment 200 may include a client device 210, a marketing server 220, a social media server 230, and/or a network 240. Devices of environment 200 may interconnect via wired connections, wireless connections, or a combination of wired and wireless connections.

Client device 210 may include a device capable of receiving, generating, storing, processing, and/or providing information. For example, client device 210 may include a communications and/or computing device, such as a mobile phone (e.g., a smart phone, a radiotelephone, etc.), a laptop computer, a tablet computer, a desktop computer, a handheld computer, or a similar device. In some implementations, client device 210 may receive information from and/or transmit information to another device in environment 200.

Marketing server 220 may include one or more devices capable of storing, processing, and/or routing information. In some implementations, marketing server 220 may include a communication interface that allows marketing server 220 to receive information from and/or transmit information to other devices in environment 200. In some implementations, marketing server 220 may generate promotions that target social media groups.

Social media server 230 may include one or more devices capable of storing, processing, and/or routing information. In some implementations, social media server 230 may include a communication interface that allows social media server 230 to receive information from and/or transmit information to other devices in environment 200. In some implementations, social media server 230 may host a social media website that allows members to interact with one another.

Network 240 may include one or more wired and/or wireless networks. For example, network 230 may include a cellular network, a public land mobile network ("PLMN"), a local area network ("LAN"), a wide area network ("WAN"), a metropolitan area network ("MAN"), a telephone network (e.g., the Public Switched Telephone Network ("PSTN")), an ad hoc network, an intranet, the Internet, a fiber optic-based network, a satellite network, a cloud computing network, and/or a combination of these or other types of networks.

The number and arrangement of devices and networks shown in Fig. 2 are provided as an example. In practice, there may be additional devices and/or networks, fewer devices and/or networks, different devices and/or networks, or differently arranged devices and/or networks than those shown in Fig. 2. Furthermore, two or more devices shown in Fig. 2 may be implemented within a single device, or a single device shown in Fig. 2 may be implemented as multiple, distributed devices. Additionally, or alternatively, a set of devices (e.g., one or more devices) of environment 200 may perform one or more functions described as being performed by another set of devices of environment 200.

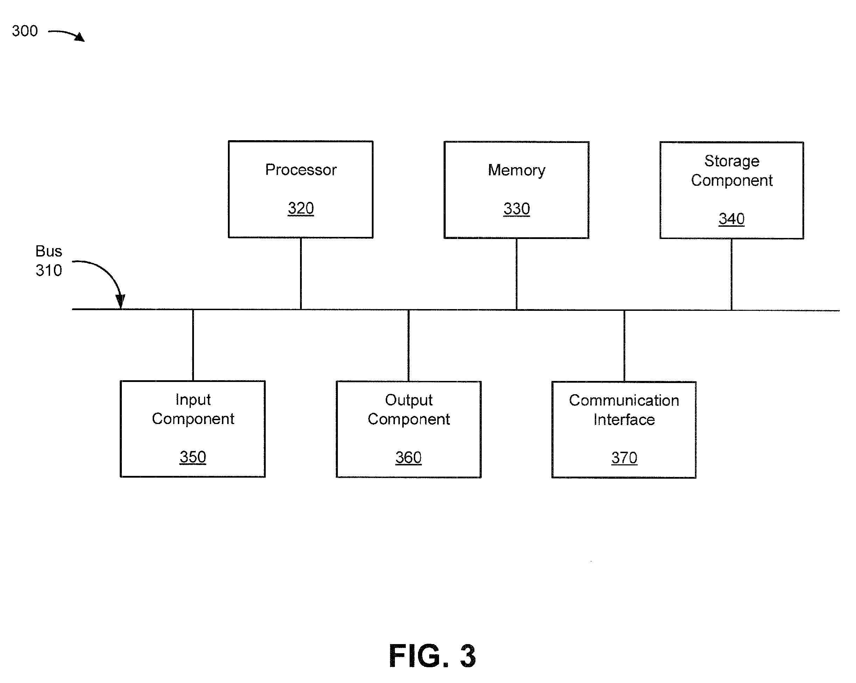

Fig. 3 is a diagram of example components of a device 300. Device 300 may correspond to client device 210, marketing server 220, and/or social media server 230. In some implementations, client device 210, marketing server 220, and/or social media server 230 may include one or more devices 300 and/or one or more components of device 300. As shown in Fig. 3, device 300 may include a bus 310, a processor 320, a memory 330, a storage component 340, an input component 350, an output component 360, and a communication interface 370.

Bus 310 may include a component that permits communication among the components of device 300. Processor 320 may include a processor (e.g., a central processing unit (CPU), a graphics processing unit (GPU), an accelerated processing unit (APU), etc.), a microprocessor, and/or any processing component (e.g., a field-programmable gate array (FPGA), an application-specific integrated circuit (ASIC), etc.) that interprets and/or executes instructions. Memory 330 may include a random access memory (RAM), a read only memory (ROM), and/or another type of dynamic or static storage device (e.g., a flash memory, a magnetic memory, an optical memory, etc.) that stores information and/or instructions for use by processor 320.

Storage component 340 may store information and/or software related to the operation and use of device 300. For example, storage component 340 may include a hard disk (e.g., a magnetic disk, an optical disk, a magneto-optic disk, a solid state disk, etc.), a compact disc (CD), a digital versatile disc (DVD), a floppy disk, a cartridge, a magnetic tape, and/or another type of computer-readable medium, along with a corresponding drive.

Input component 350 may include a component that permits device 300 to receive information, such as via user input (e.g., a touch screen display, a keyboard, a keypad, a mouse, a button, a switch, a microphone, etc.). Additionally, or alternatively, input component 350 may include a sensor for sensing information (e.g., a global positioning system (GPS) component, an accelerometer, a gyroscope, an actuator, etc.). Output component 360 may include a component that provides output information from device 300 (e.g., a display, a speaker, one or more light-emitting diodes (LEDs), etc.).

Communication interface 370 may include a transceiver-like component (e.g., a transceiver, a separate receiver and transmitter, etc.) that enables device 300 to communicate with other devices, such as via a wired connection, a wireless connection, or a combination of wired and wireless connections. Communication interface 370 may permit device 300 to receive information from another device and/or provide information to another device. For example, communication interface 370 may include an Ethernet interface, an optical interface, a coaxial interface, an infrared interface, a radio frequency (RF) interface, a universal serial bus (USB) interface, a Wi-Fi interface, a cellular network interface, or the like.

Device 300 may perform one or more processes described herein. Device 300 may perform these processes in response to processor 320 executing software instructions stored by a computer-readable medium, such as memory 330 and/or storage component 340. A computer-readable medium is defined herein as a non-transitory memory device. A memory device includes memory space within a single physical storage device or memory space spread across multiple physical storage devices.

Software instructions may be read into memory 330 and/or storage component 340 from another computer-readable medium or from another device via communication interface 370. When executed, software instructions stored in memory 330 and/or storage component 340 may cause processor 320 to perform one or more processes described herein. Additionally, or alternatively, hardwired circuitry may be used in place of or in combination with software instructions to perform one or more processes described herein. Thus, implementations described herein are not limited to any specific combination of hardware circuitry and software.

The number and arrangement of components shown in Fig. 3 are provided as an example. In practice, device 300 may include additional components, fewer components, different components, or differently arranged components than those shown in Fig. 3. Additionally, or alternatively, a set of components (e.g., one or more components) of device 300 may perform one or more functions described as being performed by another set of components of device 300.

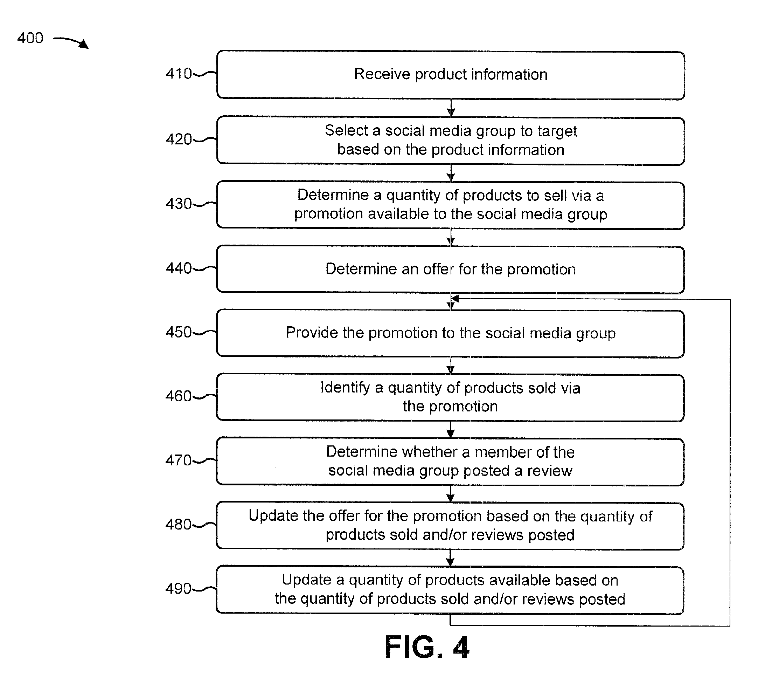

Fig. 4 is a flow chart of an example process 400 for providing a promotion to a social media group. In some implementations, one or more process blocks of Fig. 4 may be performed by marketing server 220. In some implementations, one or more process blocks of Fig. 4 may be performed by another device or a group of devices separate from or including marketing server 220, such as client device 210 and/or social media server 230. Although process 400 is described with respect to promoting a product, another item, such as a service, may be promoted. As used herein, the term "item" may include a product and/or a service.

As shown in Fig. 4, process 400 may include receiving product information (block 410). For example, marketing server 220 may receive the product information from client device 210.

In some implementations, the product information may indicate a product to be promoted. For example, the product may be a new product to be introduced to the public to increase market awareness of the product. The product information may include details and/or specifications about the product that may be used in a promotion. For example, the product information may indicate particular qualities of the product to be emphasized when promoting the product.

In some implementations, the product information may include promotion information that indicates restrictions for a promotion. For example, the promotion information may indicate a number of products permitted to be sold via the promotion. Additionally, or alternatively, the promotion information may indicate a price range that the product may be offered at via the promotion. For example, the promotion information may indicate a minimum, a maximum, and/or a target price to sell the product via the promotion.

Additionally, or alternatively, the product information may include target customer information. The target customer information may indicate types of customers and/or attributes of customers to which to market the product. For example, the target customer information may include keywords indicating an age, a gender, an education level, a geographic region, a hobby, a job, an income level, an interest, a habit, and/or another characteristic of a target customer. Additionally, or alternatively, marketing server 220 may generate keywords for target customers based on a description of a target customer included in the target customer information.

In some implementations, the product information may indicate particular individuals to which to market the product. These particular individuals may represent the type of customer to which to market the product. For example, the product information may indicate a name and/or a social media profile of a particular individual.

In some implementations, a distributer or seller of the product may input the product information into client device 210 and client device 210 may send the product information to marketing server 220. Marketing server 220 may receive the product information sent by client device 210.

As further shown in Fig. 4, process 400 may include selecting a social media group to target based on the product information (block 420). For example, marketing server 220 may select the social media group to target via a promotion.

In some implementations, marketing server 220 may select a social media website to publish the promotion based on the product information and/or attributes of the social media website. For example, marketing server 220 may select a social media website based on a quantity of members of the social media website, a target audience for the social media website (e.g., professional networks, social networks, music listeners, sports fans, or the like), a popularity of the social media website, etc. For instance, marketing server 220 may select a social media website that has a target audience that matches a target customer for the product. Additionally, or alternatively, marketing server 220 may select a social media website with a greatest quantity of members. In some implementations, marketing server 220 may select more than one social media website on which to publish the promotion.

In some implementations, marketing server 220 may search for a social media group of the social media website that includes members that are target customers of the product. For example, marketing server 220 may search the social media website for a social media group's profile and/or description that includes a keyword(s) included in the target customer information. Marketing server 220 may identify a social media group associated with the profile as a social media group to target with a promotion because the social media group most likely includes members that are target customers.

In some implementations, marketing server 220 may generate a score for each of multiple social media groups based on how many keywords and/or which keywords included in the target customer information are matched by the social media groups' profiles. For example, particular keywords may be weighted differently, such that matching a first keyword may result in a different score than matching a second keyword. Additionally, or alternatively, the score for each social media group may be based on a quantity of members included in the social media group. Furthermore, the score for each social media group may be based on a quantity of contacts associated with members included in the social media group. For example, a contact may be a member of the social media website (although not necessarily a member of the social media group) that subscribes to or is otherwise connected to a member of the social media group (e.g., a "friend," a "connection," a "follower," etc.). For instance, a contact may have access to or be provided with reviews, or other posts, written by the member of the social media group. In other words, the total number of contacts of members of the social media group may represent an influential power of the social media group. As a number of contacts increases, the total potential number of people that may read reviews written by group members also increases.

Marketing server 220 may select one or more social media groups with the highest score(s) as the social media group(s) to target. Additionally, or alternatively, marketing server 220 may select social media groups that satisfy a threshold score as the social media groups to target.

In some implementations, marketing server 220 may search for a member of the social media website that is a target customer for the product, as indicated by the product information. For example, marketing server 220 may search the social media website for a member's profile that includes a keyword(s) included in the target customer information. Marketing server 220 may identify a member associated with the member profile as a target customer. Marketing server 220 may identify social media groups to which the member belongs from the member's profile. In some implementations, marketing server 220 may select one or more of the social media groups as a social media group to target. In this way, marketing server 220 may select a social media group to target that includes at least one target customer even if a profile for the social media group does not indicate that the social media group's members would be target customers (e.g., the profile for the social media group does not include keywords indicated by the target customer information). Moreover, the social media group most likely includes other members similar to the member known to be a target customer, and thus the social media group may include other target customers.

As further shown in Fig. 4, process 400 may include determining a quantity of products to sell via a promotion to the social media group (block 430). For example, marketing server 220 may determine a quantity of products to sell via the promotion.

The product information may indicate a total number of products that may be sold via one or more promotions. However, marketing server 220 may publish a same promotion or different promotions across different social media groups. Accordingly, marketing server 220 may determine a quantity of products to sell via each promotion that targets a particular social media group. In other words, marketing server 220 may divide the total number of products that may be sold among different promotions offered to different social media groups.

In some implementations, marketing server 220 may determine a quantity of products to sell via a promotion based on the quantity of the members in the social media group, the total number of products that may be sold as indicated by the product information, the score associated with the social media group, and/or a number of social media groups to be targeted via promotions.

As further shown in Fig. 4, process 400 may include determining an offer for the promotion (block 440). For example, marketing server 220 may determine an offer for the promotion.

The offer may include a price to sell the product, a discount on the price of the product, a coupon, and/or a special offer (e.g., buy one get one free, buy one get one half off, etc.).

The offer may be determined based on the promotion information included in the product information. For example, the offer may indicate a price for the product within the range specified by the product information. Initially, the offer may be determined randomly within the restrictions set by the promotion information. For example, a random price between the maximum price and the minimum price may be determined for the offer.

As further shown in Fig. 4, process 400 may include providing the promotion to the social media group (block 450). For example, marketing server 220 may provide the promotion to the social media group by providing the promotion to social media server 230. The promotion may be a digital and/or electronic promotion.

In some implementations, marketing server 220 may provide the promotion by posting a message on a webpage for the social media group within the social media website. For example, marketing server 220 may cause a message to be posted to a forum and/or a virtual board accessible to the members of the social media group. Additionally, or alternatively, the promotion may be provided as an advertisement on the webpage for the social media group at a location reserved for advertisements. Additionally, or alternatively, the promotion may be provided via a private message to each member of the social media group via the social media website hosted by social media server 230.

The promotion may indicate details about the product from the product information, the offer (e.g., the price and/or discount for the product), a quantity of products to be sold via the promotion, a quantity of products remaining via the promotion, a promotion code associated with the offer, and/or an expiration time for the offer (e.g., an hour, a day, a week, etc.). A member of the social media group may use the promotion code to purchase the product. The promotion code may be associated with a particular offer for the promotion.

In some implementations, the promotion may include a message indicating that the offer may change after the expiration time. However, the message may not indicate how the offer will change. For example, the message may not indicate if the changed offer will be better or worse than the current offer. Alternatively, the promotion may include a message indicating that the promotion may be updated based on a member of the social media group posting a review of the product to the social media website. For example, the message may indicate that a number of products offered via the promotion will increase if a review is posted, the price of the product via the promotion will decrease if a review is posted, or the like. In other words, the message may encourage members of the social media group to post reviews of the product on the social media website to increase word of mouth about the product.

As will be discussed in more detail later, once the expiration time expires, marketing server 220 may update the promotion to reflect an updated offer, an updated promotion code, and/or an updated quantity of products remaining via the promotion. In this way, the members of the group may be kept engaged with the promotion. Furthermore, marketing information may be gathered based on the members' buying habits of the product associated with a particular offer. Accordingly, an optimized offer or price may be determined for the product based on the buying habits of the members of the group. Thus, an optimized offer or price for the product may be determined before making a mass offer to the public.

As further shown in Fig. 4, process 400 may include identifying a quantity of products sold via the promotion (block 460). For example, marketing server 220 may identify a quantity of products sold via the promotion.

In some implementations, marketing server 220 may identify the quantity of products sold via the promotion based on a member of the social media group using the promotion code to purchase the product. For example, marketing server 220 may track when a member of the social media group uses the promotion code to purchase the product.

Additionally, or alternatively, the distributer or seller of the product may use client device 210 to send, to marketing server 220, purchase information indicating the quantity of products sold via the promotion and/or the promotion code. Marketing server 220 may receive the purchase information sent by client device 210. In some implementations, the purchase information may indicate the promotion code used to purchase the product and/or indicate a member of the social media group that purchased the product.

In some implementations, marketing server 220 may record marketing information that associates an offer, a number of products purchased using the offer, and/or a member of the social media group that purchased the product using the offer.

As further shown in Fig. 4, process 400 may include determining whether a member of the social media group posted a review of the product (block 470). For example, marketing server 220 may determine whether a member of the social media group posted a review of the product.

In some implementations, marketing server 220 may send a message and/or cause a message to be sent to a member of the social media group that purchased the product. The message may indicate that the promotion targeted at the social media group may be updated based on the member of the social media group posting a review of the product to the social media website. For example, the message may indicate that a number of products offered via the promotion will increase if a review is posted, the price of the product via the promotion will decrease if a review is posted, or the like. In other words, the message may encourage the member of the social media group to post a review of the product on the social media website to increase word of mouth about the product.

Additionally, or alternatively, the message may indicate that the member of the social media group will receive a transferable promotion code for the product and/or another product if the member posts a review of the product on the social media website.

As previously discussed, the member that purchased the product may have also been encouraged to write a review in the promotion itself.

Marketing server 220 may monitor posts on the social media website that include reviews of the product. For example, a post including a review may include a metadata tag associated with the product for which marketing server 220 may search. Additionally, or alternatively, marketing server 220 may search posts on the social media website for a keyword associated with the product (e.g., a name of the product).

Once marketing server 220 has identified a review posted on the social media website, marketing server 220 may identify the member that posted the review and a social media group to which that member belongs. Marketing server 220 may identify a promotion associated with the social media group and determine the member of the social media group posted a review associated with the promotion. In some implementations, marketing server 220 may provide the transferable promotion code to the member that posted the review based on identifying that the member posted the review.

Accordingly, marketing server 220 may identify a quantity of reviews posted for the product associated with each promotion.

As further shown in Fig. 4, process 400 may include updating the offer for the promotion based on the quantity of products sold via the promotion and/or reviews posted associated with the promotion (block 480). For example, marketing server 220 may update the offer based on the expiration time for the promotion expiring.

In some implementations, marketing server 220 may update the offer based on the quantity of products sold during the expiration time. For example, if a quantity of products sold is greater than or equal to a threshold quantity, then marketing server 220 may update the offer such that the price of the product is increased and/or a discount for the product is decreased. In other words, marketing server 220 may increase the previous price at which the product was sold to test how the product will sell at a higher price. On the other hand, if a quantity of products sold is less than the threshold quantity (or another threshold quantity), then marketing server 220 may update the offer such that the price of the product is decreased and/or a discount for the product is increased. In other words, marketing server 220 may decrease the previous price at which the product was sold to test whether the product will sell better at a lower price.

In some implementations, Marketing server 220 may update the offer based on the quantity of reviews posted during the expiration time by members of the social media group that bought the product via the promotion. For example, marketing server 220 may update the offer such that a price of the product is decreased proportional to the quantity of reviews posted. In this way, marketing server 220 may reward members of the social media group for posting reviews, and increasing word of mouth of the product, by offering a better offer to other members of the social media group via the promotion.

In some implementations, marketing server 220 may update the offer based on a quality of the reviews posted during the expiration time by members of the social media group that bought the product via the promotion. For example, marketing server 220 may generate a quality score for each review based on the quantity of words in the review, a location of relevant keywords in the review, a quantity of relevant keywords in the review, a number of contacts associated with the reviewer, a number of posts by the reviewer, etc.). Marketing server 220 may combine the quality scores of each review to determine the quality of the reviews. In some implementations, marketing server 220 may update the offer to reflect a decreased price if the combined quality scores satisfy a threshold. On the other hand, marketing server 220 may update the offer to reflect an increased price if the combined quality scores do not satisfy the threshold.

In some implementations, marketing server 220 may update the offer by randomly selecting an updated offer within the restrictions indicated by the promotion information received from client device 210.

Additionally, or alternatively, marketing server 220 may update the offer based on a quantity of products still available for sale via the promotion. For example, the price of the product indicated by the offer may increase based on a quantity of products sill available for sale satisfying a threshold level (e.g., less than a threshold level).

Additionally, or alternatively, the promotion code may be updated to be associated with the updated offer.

In this way, marketing server 220 may employ gamification to keep members of the social media group interested in the promotion by updating the offer included in the promotion after each expiration time.

As further shown in Fig. 4, process 400 may include updating the quantity of products available for sale via the promotion based on the quantity of products sold and/or reviews posted (block 490). For example, marketing server 220 may update the quantity of products available based on the expiration time for the promotion expiring.

In some implementations, marketing server 220 may update the quantity of products available for sale via the promotion based on the quantity of products sold during the expiration time. For example, marketing server 220 may subtract the quantity of products sold during the expiration time from a quantity of products available for sale when the promotion was previously provided (e.g., at a start of the expiration time).

In some implementations, marketing server 220 may update the quantity of products available based on the quantity of reviews posted during the expiration time by members of the social media group that bought the product via the promotion. For example, marketing server 220 may add to the quantity of products available such that the quantity of products available is increased proportional to the quantity of reviews posted. In other words, more units of the product may be made available to the social media group via the promotion if members post reviews. In this way, marketing server 220 may reward members of the social media group for posting reviews, and increasing word of mouth of the product, by offering more units of the product via the promotion to other members of the social media group via the promotion.

In some implementations, marketing server 220 may update the quantity of products available based on a quality of the reviews posted during the expiration time by members of the social media group that bought the product via the promotion. For example, marketing server 220 may generate a quality score for each review based on the quantity of words in the review, a location of relevant keywords in the review, a quantity of relevant keywords in the review, a number of contacts associated with the reviewer, a number of posts by the reviewer, etc.). Marketing server 220 may combine the quality scores of each review to determine the quality of the reviews. In some implementations, marketing server 220 may increase the quantity of products available if the combined quality scores satisfy a threshold. On the other hand, marketing server 220 may decrease the quantity of products available if the combined quality scores do not satisfy the threshold.

As shown in Fig. 4, process 400 may return to block 450 and marketing server 220 may provide an updated promotion to the social media group. The updated promotion may indicate the updated offer, the updated quantity products available, the updated promotion code, and/or an updated expiration time.

As previously discussed, each time a promotion is updated, marketing server 220 may collect marketing information associated with the previous offer. The marketing information may associate a quantity of products sold during a particular expiration time with the offer offered during that particular expiration time. Accordingly, marketing server 220 may keep track of how well a product sells based on the offer (e.g., the price of the product) used to sell the product via the promotion. Marketing server 220 may provide the marketing information to the distributer or seller of the product by sending the marketing information to client device 210.

Marketing server 220 may continue to update the promotion provided to the social media group until there are no products available for sale (e.g., all the products available for sale have been purchased) and/or until a particular amount of time expires without all the products available for sale being purchased.

Although Fig. 4 shows example blocks of process 400, in some implementations, process 400 may include additional blocks, fewer blocks, different blocks, or differently arranged blocks than those depicted in Fig. 4. Additionally, or alternatively, two or more of the blocks of process 400 may be performed in parallel.

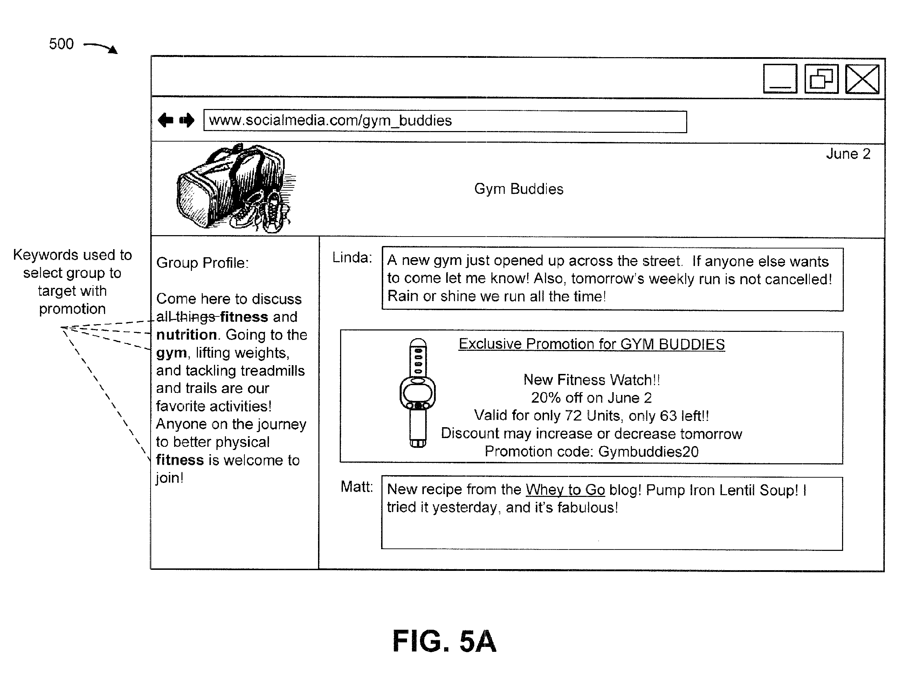

Figs. 5A-5C are diagrams of an example implementation 500 relating to example process 400 shown in Fig. 4. Figs. 5A-5C show an example of providing a promotion to a social media group.

In example implementation 500, assume marketing server 220 receives a request to market a fitness watch from client device 210. Further, assume marketing server 220 receives product information for the fitness watch that indicates the fitness watch is to be marketed to active people and/or athletes. Accordingly, marketing server 220 may generate keywords, such as "fitness," "nutrition," and "gym," based on active people and/or athletes being targeted. Further, assume marketing server 220 searches a social media website for a group using the keywords.

As shown in Fig. 5A, assume a social media group, Gym Buddies, includes the keywords in a group profile, and marketing server 220 selects Gym Buddies as a social media group to target with a promotion for the fitness watch.

As further shown in Fig. 5A, marketing server 220 may cause a promotion to be posted on a message board for Gym Buddies on June 2. The promotion may include an offer for 20% off the price of the fitness watch for June 2 only. The promotion may further indicate that the promotion is only valid for 72 fitness watches, and that only 63 fitness watches remain available for sale via the promotion. As further shown in Fig. 5A, the promotion may indicate that the discount may increase or decrease tomorrow. Additionally, or alternatively, the promotion may include a promotion code (e.g., Gymbuddies20) associated with the 20% discount that is only valid for use on June 2.

On June 2, assume eight fitness watches are sold via the promotion. In other words, assume eight members of Gym Buddies used the promotion code to purchase the fitness watch. Further, assume no member of Gym Buddies post a review of the fitness watch on June 2.

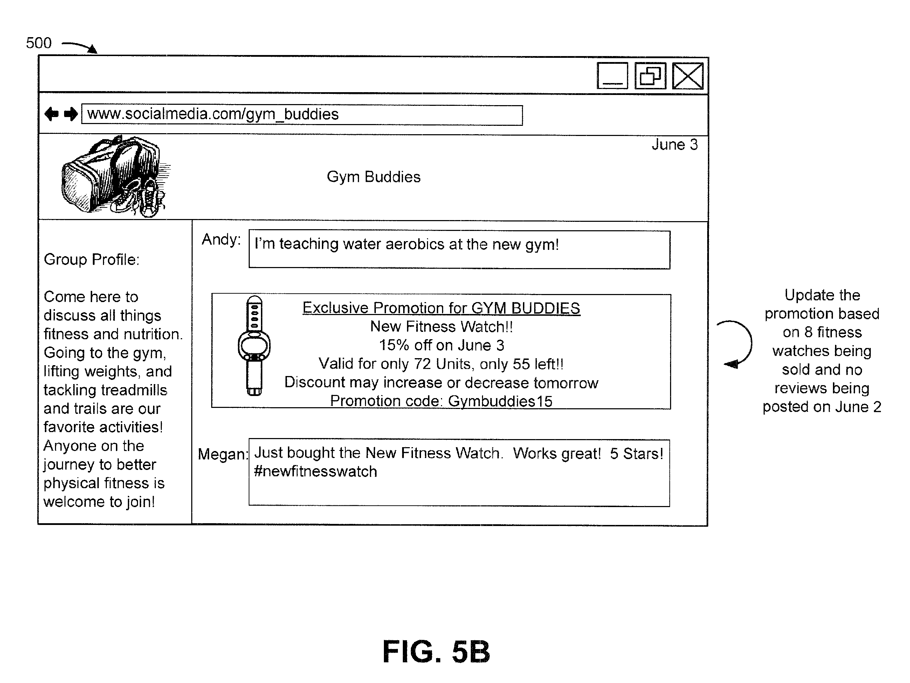

As shown in Fig. 5B, marketing server 220 may update the promotion on June 3 based on the eight fitness watches being sold and zero reviews being posted on June 2. For example, marketing server 220 may update the offer to be 15% off the price of the fitness watch based on eight fitness watches being sold on June 2. Further, marketing server 220 may update the quantity of fitness watches available to be 55 fitness watches based on eight fitness watches being sold and 63 fitness watches previously being available on June 2 (e.g., 63 available fitness watches minus 8 fitness watch sold equals 55 fitness watches remaining). Marketing server 220 may also update the promotion code (e.g., Gymbuddies15) to be associated with the updated offer.

On June 3, assume six fitness watches are sold via the promotion. In other words, assume six members of Gym Buddies used the promotion code to purchase the fitness watch. Further, assume one member of Gym Buddies (e.g., Megan) posts a review of the fitness watch to the social media website. As shown in Fig. 5B, the review may be posted in the message board of the Gym Buddies webpage. Additionally, or alternatively, the review may be posted to a webpage for Megan on the social media website and/or be posted to a public webpage accessible by other members of the social media website, including Megan's contacts. The review may include a metadata tag (e.g., #newfitnesswatch) that marketing server 220 uses to detect that the review has been posted to the social media website.

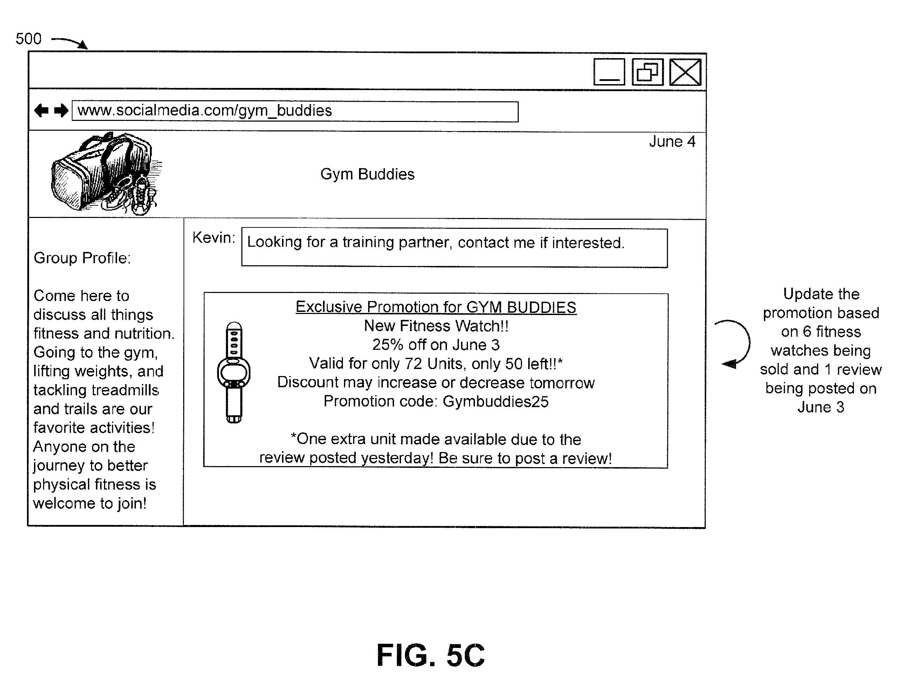

As shown in Fig. 5C, marketing server 220 may update the promotion on June 4 based on the six fitness watches being sold and one review being posted on June 3. For example, marketing server 220 may update the offer to be 25% off the price of the fitness watch based on eight fitness watches being sold and one review being posted on June 3. Further, marketing server 220 may update the quantity of fitness watches available to be 50 fitness watches based on six fitness watches being sold and 55 fitness watches previously being available on June 3 (e.g., 55 available fitness watches minus 6 fitness watch sold equals 49 fitness watches remaining). However, marketing server 220 may increase the number of fitness watches available via the promotion based on the review being posted (e.g., 49 fitness watches remaining plus one fitness watch equals 50 fitness watches remaining). Marketing server 220 may also update the promotion code (e.g., Gymbuddies25) to be associated with the updated offer.

Marketing server 220 may continue to update the promotion every day until no more fitness watches are available for sale via the promotion, or until an end of the promotion period.

As indicated above, Figs. 5A-5C are provided merely as an example. Other examples are possible and may differ from what was described with regard to Figs. 5A-5C.

Implementations described herein may create awareness of a product by providing promotions to targeted social media groups on social media websites. Moreover, implementations described herein may use gamification to keep members of the social media groups interested in the product and/or the promotion by continuously updating an offer in the promotion. Furthermore, implementations described herein may encourage members of the social media group to post reviews of the product on the social media website so that contacts of the members may become aware of the product.

The foregoing disclosure provides illustration and description, but is not intended to be exhaustive or to limit the implementations to the precise form disclosed. Modifications and variations are possible in light of the above disclosure or may be acquired from practice of the implementations.

As used herein, the term component is intended to be broadly construed as hardware, firmware, and/or a combination of hardware and software.

Some implementations are described herein in connection with thresholds. As used herein, satisfying a threshold may refer to a value being greater than the threshold, more than the threshold, higher than the threshold, greater than or equal to the threshold, less than the threshold, fewer than the threshold, lower than the threshold, less than or equal to the threshold, equal to the threshold, etc.

Certain user interfaces have been described herein and/or shown in the figures. A user interface may include a graphical user interface, a non-graphical user interface, a text-based user interface, etc. A user interface may provide information for display. In some implementations, a user may interact with the information, such as by providing input via an input component of a device that provides the user interface for display. In some implementations, a user interface may be configurable by a device and/or a user (e.g., a user may change the size of the user interface, information provided via the user interface, a position of information provided via the user interface, etc.). Additionally, or alternatively, a user interface may be pre-configured to a standard configuration, a specific configuration based on a type of device on which the user interface is displayed, and/or a set of configurations based on capabilities and/or specifications associated with a device on which the user interface is displayed.

It will be apparent that systems and/or methods, described herein, may be implemented in different forms of hardware, firmware, or a combination of hardware and software. The actual specialized control hardware or software code used to implement these systems and/or methods is not limiting of the implementations. Thus, the operation and behavior of the systems and/or methods were described herein without reference to specific software code-it being understood that software and hardware can be designed to implement the systems and/or methods based on the description herein.

Even though particular combinations of features are recited in the claims and/or disclosed in the specification, these combinations are not intended to limit the disclosure of possible implementations. In fact, many of these features may be combined in ways not specifically recited in the claims and/or disclosed in the specification. Although each dependent claim listed below may directly depend on only one claim, the disclosure of possible implementations includes each dependent claim in combination with every other claim in the claim set.

No element, act, or instruction used herein should be construed as critical or essential unless explicitly described as such. Also, as used herein, the articles "a" and "an" are intended to include one or more items, and may be used interchangeably with "one or more." Furthermore, as used herein, the term "set" is intended to include one or more items, and may be used interchangeably with "one or more." Where only one item is intended, the term "one" or similar language is used. Also, as used herein, the terms "has," "have," "having," or the like are intended to be open-ended terms. Further, the phrase "based on" is intended to mean "based, at least in part, on" unless explicitly stated otherwise.

## Claims

1. A device, comprising:
one or more processors to:
select a social media group to target with a promotion for an item;
generate the promotion,
the promotion indicating an offer for the item and indicating that the offer will change after a particular period of time;
provide the promotion to the social media group via a social media website;
determine an updated offer for the promotion based on at least one of a quantity of items sold during the particular period of time or a review of the item posted on the social media website by a member of the social media group; and
update the promotion provided to the social media group, via the social media website, to indicate the updated offer after the particular period of time expires.

2. The device of claim 1, where the one or more processors are further to:
receive item information for the item; and
where the one or more processors, when selecting the social media group to target, are further to:
select the social media group to target with the promotion based on the item information; or
determine a quantity of members of the social media group, and select the social media group to target with the promotion based on the quantity of members of the social media group.

3. The device of claim 1 or 2, where the one or more processors, when selecting the social media group to target are further to:
determine a quantity of contacts, on the social media website, of members of the social media group,
the members including the member; and
select the social media group to target with the promotion based on the quantity of contacts.

4. The device of any one of the preceding claims, where the one or more processors, when generating the promotion, are further to:
generate the promotion to indicate a quantity of the item available for sale via the promotion; and
where the one or more processors, when updating the promotion, are further to:
determine an updated quantity of the item available for sale based on the review of the item posted by the member; and
update the promotion to indicate the updated quantity of the item available for sale and the updated offer for the item.

5. The device of any one of the preceding claims, where the one or more processors, when generating the promotion, are further to generate the promotion to indicate that:
the offer will change after a particular period of time without indicating how the offer will change; or
a price of the item offered via the promotion will increase or decrease after the particular amount of time expires.

6. A computer-readable medium storing instructions, the instructions comprising:
one or more instructions that, when executed by one or more processors, cause the one or more processors to:
select a social media group to target with a promotion for an item;
generate the promotion,
the promotion indicating an offer for the item and indicating that the offer is valid for a particular period of time;
post the promotion on a webpage for the social media group via a social media website;
determine an updated offer for the promotion based on a review posted on the social media website by a member of the social media group; and
update the promotion posted to the webpage for the social media group to indicate the updated offer after the particular period of time expires.

7. The computer-readable medium of claim 6, where the one or more instructions, that cause the one or more processors to determine the updated offer, further cause the one or more processors to:
when the offer indicates a price of the item, decrease the price of the item based on the review of the item being posted on the social media website; or
determine the updated offer based on a quantity of reviews of the item posted on the social media website by members of the social media group, wherein the reviews include the review, and wherein the members include the member.

8. The computer-readable medium of claim 6 or 7, where the one or more instructions, when executed by the one or more processors, further cause the one or more processors to:
search the social media website for reviews about the item,
the reviews including the review;
identify a social media member of the social media website that posted the review based on searching for the reviews; and
determine the social media group based on the social media member that posted the review being the member of the social media group.

9. The computer-readable medium of any one of claims 6 to 8, where the one or more instructions, when executed by the one or more processors, further cause the one or more processors to:
identify a social media member of the social media website that is a target consumer of the item;
search a profile for the social media member that indicates social media groups to which the social media member belongs,
the social media groups including the social media group; and
where the one or more instructions, that cause the one or more processors to select the social media group, further cause the one or more processors to:
select the social media group from among the social media groups to which the social media member belongs.

10. The computer-readable medium of any one of claims 6 to 9, where the one or more instructions, when executed by the one or more processors, further cause the one or more processors to:
increase a quantity of items available for sale via the promotion based on the review; and/or
detect the review is posted on the social media website based on a metadata tag included in the review.

11. A method, comprising:
selecting, by a device, a social media group to target with a promotion for an item;
generating, by the device, the promotion,
the promotion indicating an offer for the item and indicating that the offer will change after a particular period of time;
providing, by the device, the promotion to the social media group via a social media website;
determining, by the device, an updated offer for the promotion based on at least one of a quantity of items sold via the promotion during the particular period of time or a review of the item posted on the social media website by a member of the social media group; and
updating, by the device, the promotion provided to the social media group to indicate the updated offer after the particular period of time expires.

12. The method of claim 11, further comprising:
determining the member purchased the item via the promotion;
sending a request to the member that requests the member post the review of the item on the social media website,
the request indicating that the offer included in the promotion provided to the social media group will be updated based on the review being posted by the member.

13. The method of claim 11 or 12, where generating the promotion further comprises:
generating the promotion to indicate that the offer will be updated based on the review being posted by the member; and
where determining the updated offer may further comprise:
determining the updated offer based on the quantity of items sold via the promotion during the particular period of time and the review of the item posted on the social media website by the member of the social media group.

14. The method of any one of claims 11 to 13, further comprising:
determining a quantity of items available for sale via the promotion based on at least one of the quantity of items sold via the promotion during the particular period of time or the review of the item posted on the social media website by the member of the social media group; and
where updating the promotion includes updating the promotion to indicate the quantity of items available for sale via the promotion.

15. The method of any one of claims 11 to 14, further comprising:
determining a quantity of items available for sale via the promotion,
the quantity of items available for sale being decreased based on the quantity of items sold via the promotion during the particular period of time,
the quantity of items available for sale being increased based on the review of the item posted on the social media website by the member of the social media group; and
where updating the promotion includes updating the promotion to indicate the quantity of items available for sale via the promotion.
